# EUROPÄISCHE PATENTSCHRIFT

(11) **EP 3 221 599 B1**
(45) Veröffentlichungstag und Bekanntmachung des Hinweises auf die Patenterteilung: **07.10.2020**
(21) Anmeldenummer: 15812965.0
(22) Anmeldetag: 19.11.2015
(51) Int. Cl.: F16B 7/04, E06B 3/667

(54) **STECKVERBINDER UND STECKVERBINDUNG**
PLUG CONNECTOR AND PLUG CONNECTION
FICHE ET CONNEXION ENFICHABLE

(30) Priorität: 19.11.2014 DE 202014105547 U
(43) Veröffentlichungstag der Anmeldung: 27.09.2017
(73) Patentinhaber: Kronenberg, Ralf M., 42781 Haan (DE)
(72) Erfinder: Kronenberg, Ralf M., 42781 Haan (DE)
(74) Vertreter: Ernicke, Klaus Stefan
(86) Internationale Anmeldenummer: PCT/EP2015/077048
(87) Internationale Veröffentlichungsnummer: WO 2016/079220

(56) Entgegenhaltungen:
- DE-A1-102011 055 539
- DE-U1- 20 101 486
- DE-U1-202006 006 087
- DE-U1-202008 013 046

## Beschreibung

Die Erfindung betrifft einen Steckverbinder und eine Steckverbindung.

In der Praxis ist es bekannt, Abstandshalterhohlprofile für Isolierglasscheiben mittels Steckverbindern zu verbinden, wobei die Steckverbinder sich im Profilinnenraum mit Rückhalteelementen verkrallen und durch Reib- und Formschluss für den Zusammenhalt der zusammengesteckten Profilenden sorgen.

Die DE 20 2008 013 046 U1 und die DE 20 2006 006 087 U1 zeigen jeweils einen Steckverbinder mit eingeschnittenen Seitenwänden, die jeweils eine Mehrzahl von seitlich und vertikal nachgiebigen Federbrücken bilden, welche jeweils durchgehende Zahnleisten am freien oberen Rand aufweisen. Im Bereich der Verbindermitte sind die Seitenwände im oberen Bereich ausgeschnitten. Die Verbinder sind für Warm-Edge-Profile vorgesehen und ausgebildet.

Es ist Aufgabe der vorliegenden Erfindung, eine verbesserte Steckverbindungstechnik aufzuzeigen.

Die Erfindung löst diese Aufgabe mit den Merkmalen in den selbstständigen Ansprüchen.
Die beanspruchte Verbindungstechnik, d.h. der Steckverbinder und die damit hergestellte Steckverbindung sowie das zugehörige Verfahren, haben den Vorteil einer hohen Sicherheit und großen mechanischen Belastbarkeit der Steckverbindung durch die thermische Verbindung, insbesondere Schweißverbindung bzw. Schweißnaht. Der beanspruchte Steckverbinder ist für eine solche Steckverbindung besonders geeignet und ausgebildet.

Insbesondere können vom Steckverbinder die von außen einwirkenden thermischen Belastungen besonders gut und ohne Einbußen an Funktionsfähigkeit des Steckverbinders aufgenommen werden. Der Steckverbinder ist auch für die beim Verbindungsprozess einwirkenden äußeren mechanischen Belastungen besonders geeignet. Der Steckverbinder kann zudem die Hohlprofilenden von innen her wirksam stützen und für eine Form- und Maßhaltigkeit der Hohlprofile und ihrer Enden vor und nach dem Verbindungsprozess sorgen. Etwaige Profilverzüge können verhindert werden. Zudem wird über den Steckverbinder auch die beim Verbindungsprozess einwirkende Wärme zügig abgeführt.

Der beanspruchte Steckverbinder ist durch seine weitestgehend massive Wandgestaltung mechanisch sehr stabil und sorgt für eine sichere Führung und Ausrichtung der beidseits aufgesteckten Hohlprofilenden. Er kann die Hohlprofilenden in der Stoßstellung zusammenhalten und deren Stoßlage beim thermischen Verbindungsprozess, insbesondere Schweißprozess, sichern. Der beanspruchte Steckverbinder kann auch ohne thermische Verbindung benutzt werden.

Insbesondere ist es dabei günstig, dass der Steckverbinder am oberen freien Rand seiner Seitenwände eine Stütz- und Rückhaltestruktur aufweist. Er kann ansonsten mit seinen Seiten- und Bodenwänden weitestgehend flächig an den Innenseiten der Hohlprofilwände stützend und führend anliegen. Am Boden können ggf. weitere Rückhalteelemente angeordnet sein. Günstig ist außerdem die Anordnung eines Mittenanschlags am gleichen oberen Seitenwandrand.

Die Stütz- und Führungsstruktur ist bevorzugt gegen das Dach der Hohlprofilenden gerichtet, welches bei Einbaustellung in einer Isolierglasscheibe zum äußeren Scheibenrand weist. Hierdurch werden die Seitenwände und das Dach stabilisiert und in ihrer Formgebung gesichert, so dass die einzelnen Glasscheiben der Isolierverglasung flächig und dicht auf dem oder den Hohlprofilen anliegen können. Zudem kann eine bevorzugte und ggf. lokale thermische Verbindungsstelle stabilisiert werden.

Die Stütz- und Rückhaltestruktur der Seitenwände weist jeweils beidseits des Mittenanschlags bzw. der Mittellinie eine Stützleiste mit einer geraden axialen Oberkante auf. Hier kann das Dach an der Stoßstelle bzw. der Schweißnaht abgestützt werden.

Eine nach außen gerichtete Ausbuchtung an den Seitenwänden kann unterschiedlich ausgebildet sein und kann verschiedene Funktionen haben. Eine Ausbildung ist z.B. als Sicke oder als freigeschnittene Ausprägung möglich. Die Ausbuchtung kann seitliche Maßtoleranzen des Hohlprofilendes aufnehmen. Sie kann ferner zur verbesserten Abdichtung dienen. Zudem kann sie die Stabilität des Steckverbinders verbessern, insbesondere in Form einer einfachen oder mehrfachen Sickenanordnung. Die beanspruchte Verbinderausbildung mit einer Ausbuchtung hat eigenständige erfinderische Bedeutung und kann mit Vorteil auch bei anderen vorbekannten Steckverbindern eingesetzt werden. Ein solcher bevorzugt gerader Steckverbinder für Hohlprofile von Abstandshaltern einer Isolierverglasung kann in einer Ausgestaltung einen Mittelsteg oder Boden mit randseitigen Seitenwänden sowie einen Mittenanschlag und Rückhalteelemente aufweisen und an den Seitenwänden im Bereich der Verbindermitte eine nach außen gerichtete Ausbuchtung, insbesondere Ausprägung, aufweisen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: einen Steckverbinder in perspektivischer Ansicht,
- Figur 2 bis 4:: den Steckverbinder von Figur 1 in Seitenansicht, Draufsicht und in Stirnansicht gemäß Pfeil IV von Figur 2,
- Figur 5 bis 7:: eine Steckverbindung mit Steckverbinder und ein oder mehreren Hohlprofilen in Seitenansicht, Draufsicht und Stirnansicht,
- Figur 8 bis 11:: einen Steckverbinder mit einer seitlichen Ausbuchtung in zwei Varianten mit jeweils abgebrochener Seitenansicht und Draufsicht,
- Figur 12 bis 15:: eine Variante des Steckverbinders in verschiedenen Ansichten und
- Figur 16 bis 18:: eine Steckverbindung mit der Variante des Steckverbinders in verschiedenen Ansichten.

Die Erfindung betrifft einen Steckverbinder (1) für Hohlprofile (3,4) von Abstandshaltern einer Isolierverglasung. Die Erfindung betrifft ferner eine von den Hohlprofilen bzw. Hohlprofilenden (3,4) und dem eingesteckten Steckverbinder (1) hergestellte Steckverbindung (2) sowie ein zugehöriges Verfahren zur Verbindung von Hohlprofilen bzw. Hohlprofilenden (3,4).

Die miteinander verbundenen Hohlprofile (3,4) bilden einen am Scheibenrand umlaufenden Abstandshalterrahmen, der die seitlich plan aufgelegten Glasscheiben einer Isolierverglasung voneinander distanziert, wobei ein dichter Scheibeninnenraum gebildet wird, in dem sich ein inertes Gas befinden kann. Im Abstandshalterrahmen kann sich ein granuliertes Trockenmittel befinden.

Die gezeigten Hohlprofile (3,4) bestehen zumindest bereichweise aus Metall, z.B. Stahl, insbesondere Edelstahl, oder einem Leichtmetall. Sie können z.B. als gerollte oder gezogene Metallprofile oder als Strangpressprofile ausgebildet sein. Die Hohlprofile (3,4) können alternativ aus einem anderen, für thermische Verbindungen geeigneten Werkstoff bestehen. Sie können ferner als Verbundprofile aus Metall und Kunststoff oder anderen thermisch geeigneten Werkstoffen bestehen.

Der Abstandshalterrahmen kann aus ein oder mehreren Hohlprofilen (3,4) hergestellt werden. Bei einer einteiligen Ausführung wird ein einzelnes Hohlprofil mehrfach zur Bildung von Eckbereichen gebogen, wobei seine Hohlprofilenden (3,4) bevorzugt in einem geraden Rahmenbereich zu liegen kommen und hier durch den eingesteckten Steckverbinder (1) sowie durch eine thermische Verbindung (5) miteinander verbunden werden. Alternativ können mehrere einzelne Hohlprofilstücke miteinander verbunden werden, wobei auch hier die Hohlprofilenden (3,4) beidseits auf den Steckverbinder (1) aufgesteckt und durch die besagte thermische Verbindung (5) an der Stoßstelle oder Verbindungsstelle (6) verbunden werden.

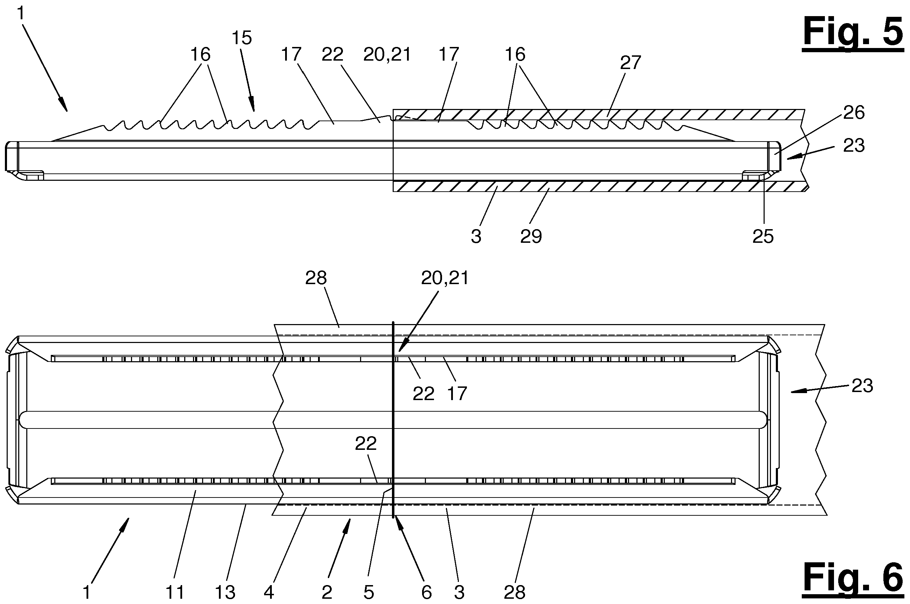

An der Stoßstelle (6) stoßen die bevorzugt gerade abgeschnittenen Stirnwände der Hohlprofilenden (3,4) dicht und vorzugsweise fugenfrei aneinander. Sie werden hier durch die thermische Verbindung (5) miteinander fest und dicht verbunden. Die thermische Verbindung kann eine Schweißverbindung, insbesondere eine am äußeren Profilumfang bereichsweise oder umlaufend angeordnete Schweißnaht sein. Figur 6, 17 und 18 zeigen diese thermische Verbindung (5).

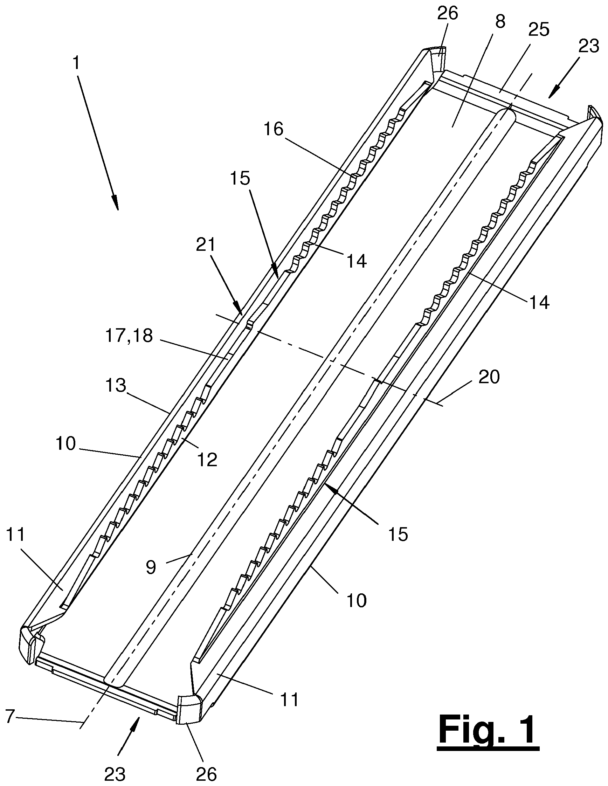

Figur 1 bis 7 zeigen eine erste Ausführungsform des Steckverbinders (1). Er ist in den gezeigten Ausführungsbeispielen als Geradverbinder ausgebildet. Alternativ kann er als Eckwinkel gestaltet sein. Der Steckverbinder (1) besitzt einen Boden (8) mit randseitigen Seitenwänden (10) sowie einen Mittenanschlag (21) und Rückhalteelemente (16).

Der Steckverbinder (1) weist zumindest im Bereich der Verbindermitte (20) bzw. der dortigen Stoßstelle (6) ein temperaturfestes Material auf und ist für eine thermische Verbindung (5) der Hohlprofile (3,4) geeignet ausgebildet. Das temperaturfeste Material besteht vorzugsweise aus Metall, insbesondere Stahl. In den gezeigten Ausführungsbeispielen ist der Steckverbinder (1) als Stanz- und Biegeteil aus einem ggf. vorbehandelten Stahlblech, insbesondere einem verzinkten Stahlblech, hergestellt. Alternativ kann der Steckverbinder als metallisches Gußteil oder als Verbundteil gestaltet sein, wobei das Verbundteil nur bereichsweise, insbesondere um den Bereich der Verbindermitte (20), Metall aufweisen und ansonsten aus einem anderen Werkstoff bestehen kann. In weiterer Abwandlung kann das temperaturfeste Material aus einem anderen geeigneten, nichtmetallischen Werkstoff bestehen.

Der Steckverbinder (1) hat zumindest im mittleren Bereich eine gegenüber äußeren Querbelastungen steife Form. Er stützt dadurch die beidseits aufgesteckten Hohlprofilenden (3,4) von innen gegen die beim Herstellprozess oder Verbindungsprozess, insbesondere bei Bildung der thermischen Verbindung (5), von außen einwirkenden Querbelastungen. Dies können Kräfte und/oder Momente sein.

Der gezeigte Geradverbinder (1) hat eine gestreckte Form mit einer Längsachse (7) und einer querliegenden Mittellinie (20). Beidseits der Mitte (20) weist der Steckverbinder (1) gerade und fluchtende Verbinderschenkel auf, die an ihren freien Verbinderenden (23) vorzugsweise offen sind. Sie können hier schräg nach innen ragende Seitenzungen (26) an den Stirnenden der Seitenwände (10) und ggf. auch eine Bodenzunge (25) aufweisen, welche das Aufstecken des jeweiligen Hohlprofilendes (3,4) erleichtern.

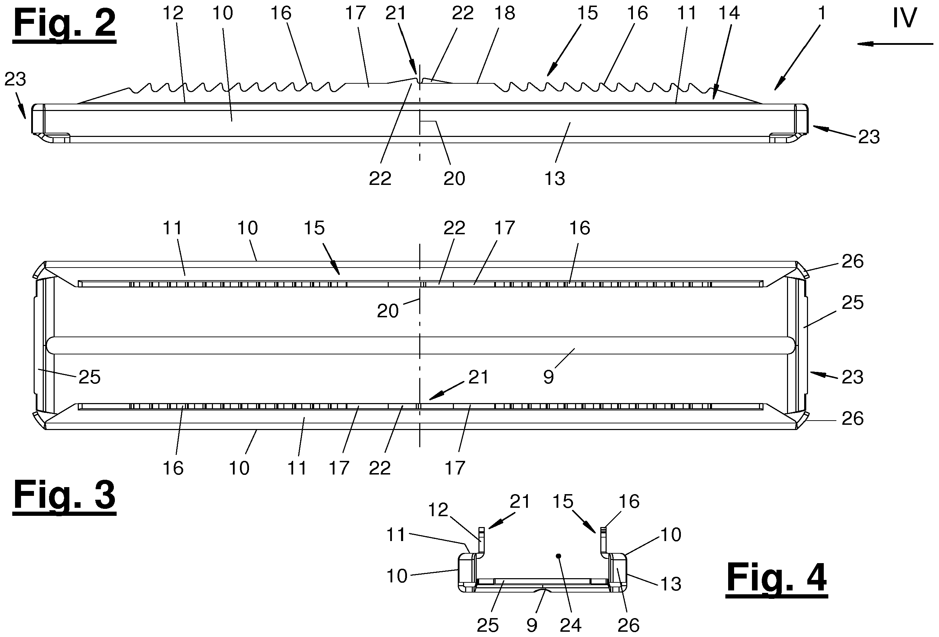

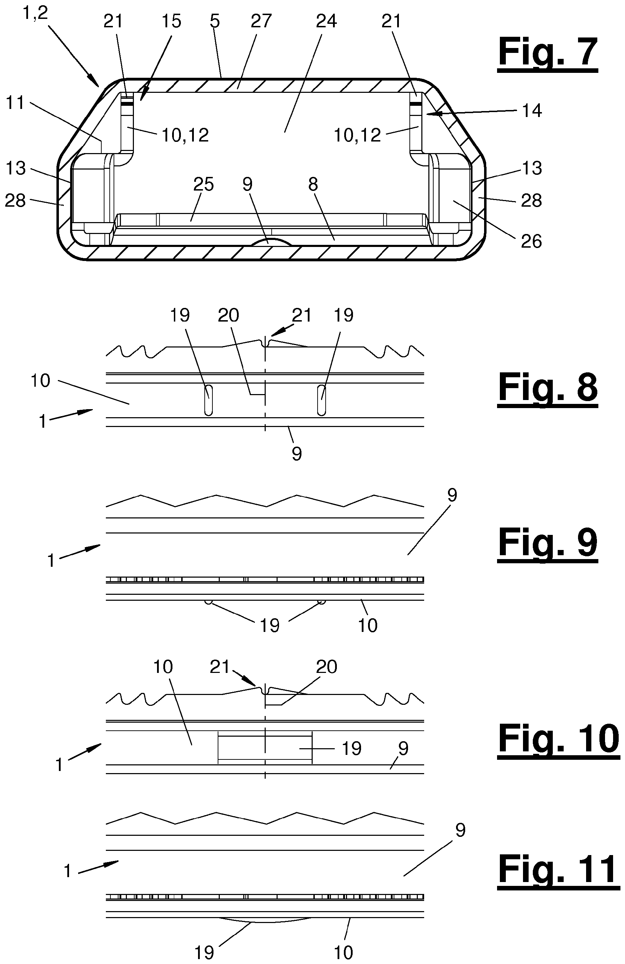

Der Steckverbinder (1) hat einen im Wesentlichen U-förmigen Querschnitt mit im oberen Bereich (12) stufenförmig zur Verbinderinnenseite einspringenden (11) Seitenwänden (10). Wie Figur 4 und 7 in den jeweiligen Stirnansichten verdeutlichen, hat der Steckverbinder (1) in der bevorzugten Ausführungsform eine Hammerkopf-Form oder Omega-Form, wobei die Seitenwände (10) eine abgewinkelte Querschnittsform unter Bildung einer Stufe (11) aufweisen. Der untere und an den Längsrand des Bodens (8) anschließende Seitenwandbereich (13) weist einen aufrechten bzw. rechtwinklig zur Bodenhauptebene ausgerichteten Schenkel auf, der anschließend zur Stufenbildung (11) in einen einspringenden Querschenkel übergeht, der vorzugsweise im Wesentlichen parallel zur Bodenhauptebene ausgerichtet ist. Der an der Querschenkel anschließende obere Seitenwandbereich (12) erstreckt sich wieder aufrecht bzw. nach oben und ist im Wesentlichen senkrecht zur Bodenhauptebene ausgerichtet.

Der obere und der untere Seitenwandbereich (12,13) haben eine im Wesentlichen ebene Form bzw. Oberfläche und sind im Wesentlichen parallel ausgerichtet. Der obere Seitenwandbereich (12) ist gegenüber dem unteren Seitenwandbereich (13) in Richtung zur zentralen Längsachse (7) versetzt angeordnet. Die Stufe (11) bzw. der Querschenkel ist ebenfalls eben ausgebildet. Der Boden (8) und die Seitenwände (10) sind als dünnwandige Stege ausgebildet. Die abgestufte Seitenwandform kann z.B. durch Biegen und Abkanten hergestellt werden. Der Steckverbinder (1) in den gezeigten Ausführungsformen ist vorzugsweise einteilig ausgebildet.

Figur 5 bis 7 sowie Figur 16 bis 18 verdeutlichen die Formgebung der Hohlprofile (3,4) bzw. der Hohlprofilenden. Diese weisen einen Boden (29) auf, der zum Scheibeninnenraum gerichtet ist. Sie haben ferner aufrechte Seitenwände (28) und ein zur Rahmenaußenseite gerichtetes Dach (27). Der Übergang zwischen den Seitenwänden (28) und dem Dach (27) kann gemäß Figur 7 abgeschrägt sein. Er kann alternativ rechtwinklig ausgebildet sein. Ferner können auch die Hohlprofile (3,4) eine Hammerkopf- oder Omega-Form haben.

Die Seitenwände (10) des Steckverbinders (1) haben am oberen freien Rand (14) eine gegen das Dach (27) gerichtete Stütz- und Rückhaltestruktur (15). Außerdem ist vorzugsweise der Mittenanschlag (21) im Bereich der Mitte (20) an diesem oberen freien Rand (14) angeordnet. Die Seitenwände (10) sind im Bereich unter der Stütz- und Rückhaltestruktur (15) vorzugsweise massiv und unterbrechungsfrei ausgebildet. Sie haben dadurch und durch ihre abgewinkelte Form eine hohe mechanische Festigkeit.

Die Seitenwände (10) haben bei der Ausführung von Figur 1 bis 7 eine gerade Form in Richtung der Längsachse (7). Diese gerade Form erstreckt sich durchgehend über den wesentlichen Teil der Verbinderlänge bis zu den ggf. vorhandenen Seitenzungen (26). Das wirkt sich ebenfalls für die Stabilität des Steckverbinders (1) und der Steckverbindung (2) sowie für den Rückhalt und die Führung des Steckverbinders (1) in den Hohlprofilenden (3,4) positiv aus.

Die Seitenwände (10) liegen mit ihrem unteren Wand- oder Stegbereich (13) vorzugsweise plan an der hier ebenfalls bevorzugt ebenen jeweiligen Seitenwand (28) der Hohlprofilenden (3,4) an. Die Höhe dieser beiden Wandbereiche ist vorzugsweise gleich groß, wobei die Biegestelle zwischen dem unteren Wandbereich (13) und der Stufe (11) sich z.B. auf gleicher Höhe wie die Abwinklung der Seitenwand (28) befindet und diese stützt. Die oberen Seitenwandbereiche (12) und die dortige Stütz- und Rückhaltestruktur (15) greifen am Dach (27) an, wobei sie sich vorzugsweise nahe der Übergangsstelle zwischen dem Dach (27) und dem schrägen Teil der Seitenwand (28) befinden. Der seitliche Einsprung bzw. die Stufe (11) hat hierfür eine entsprechende Tiefe.

Die Stütz- und Rückhaltestruktur (15) der Seitenwände (10) weist jeweils beidseits des Mittenanschlags (21) bzw. der Mittellinie (20) eine Stützleiste (17) mit einer geraden axialen Oberkante (18) auf. Hier kann das Dach (27) an der Stoßstelle (6) bzw. der Schweißnaht (5) abgestützt werden.

Die Stützleisten (17) haben beidseits der Mitte eine begrenzte Länge. Die Stütz- und Rückhaltestruktur (15) weist ferner mehrere Rückhalteelemente (16) auf, die in Axialrichtung und in Richtung zu den benachbarten Verbinderenden (23) hin an die Stützleisten (17) anschließen. Die Rückhalteelemente (16) sind vorzugsweise in der Hauptebene des oberen Seitenwandbereichs (12) angeordnet und nach oben zum Dach (27) gerichtet. Sie können mit Abstand vor dem jeweiligen Verbinderende (23) enden, wobei die Seitenwand zum Verbinderende (23) hin schrägt abfällt und das Aufschieben der Hohlprofilenden (3,4) erleichtert. Die oberen Enden der Rückhalteelemente (16) können auf Höhe der Stützleisten (17) oder etwas darüber angeordnet sein.

Die Rückhalteelemente (16) sind z.B. als Zähne ausgebildet. Sie können dabei eine Sägezahnform haben, die an den Verbinderschenkeln jeweils zur Verbindermitte (20) gerichtet ist. Die flachere Zahnflanke weist jeweils zum Verbinderende (23) und die steilere Flanke zur Verbindermitte (20). Die Sägezahnform erleichtert das Aufstecken der Hohlprofilenden (3,4) und sperrt mit ihrer sich einkrallenden Spitze die Abzugsbewegung in Gegenrichtung. Alternativ können die Rückhalteelemente (15) in anderer Weise, z.B. als Rippen oder Wellen oder auch als Federnasen ausgebildet sein.

Der Mittenanschlag (21) kann unterschiedlich ausgebildet sein. In den gezeigten Ausführungsbeispielen von Figur 1 bis 11 hat er feste und gegeneinander versetzte keilförmige Anschlagnasen (22). An den freien Rändern (14) ist jeweils nur eine Anschlagnase (22) angeordnet, wobei die beiden Anschlagnasen (22) sich beidseits der Verbindermitte (20) befinden und gegeneinander gerichtet sind. Die Anschlagnasen (22) weisen jeweils eine zur Verbindemitte (20) gerichtete, steil ansteigende Anschlagflanke und eine zum benachbarten Verbinderende (23) gerichtete, weniger steil ansteigende Auflaufflanke auf. Letztere geht in die besagte Oberkante (18) der Stützleiste (17) über.

Auf der Auflaufflanke können die aufgesteckten Hohlprofilenden (3,4) aufgleiten, wobei sie auf der anderen Seite jenseits der Längsachse an die steile Anschlagflanke der anderen Anschlagnase (22) oder an der dort ggf. schon befindlichen Stirnseite des anderen Hohlprofilendes (4,3) anschlagen. Hierdurch kann eine fugenlose Stoßstelle (6) mit dichter Anlage der Profilstirnwände gebildet werden.

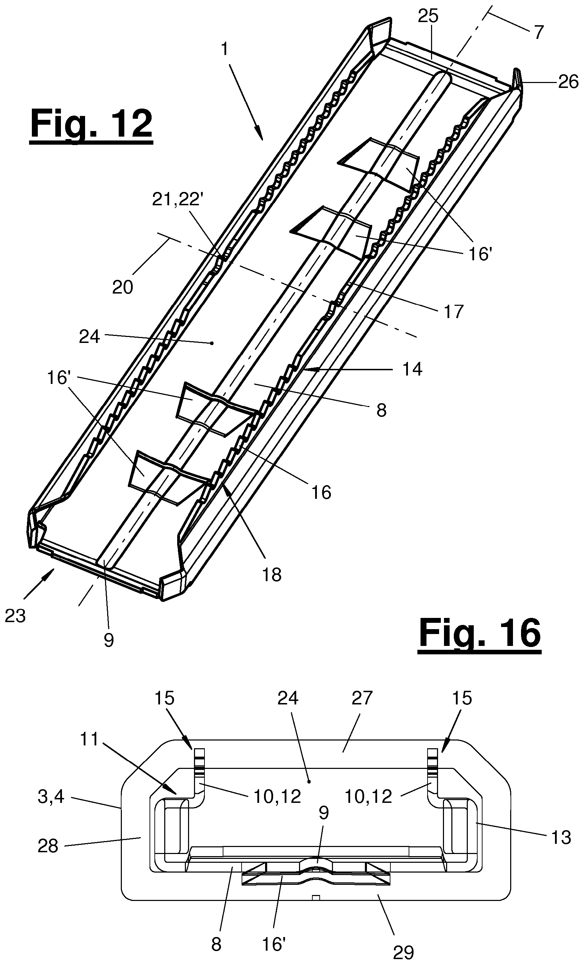

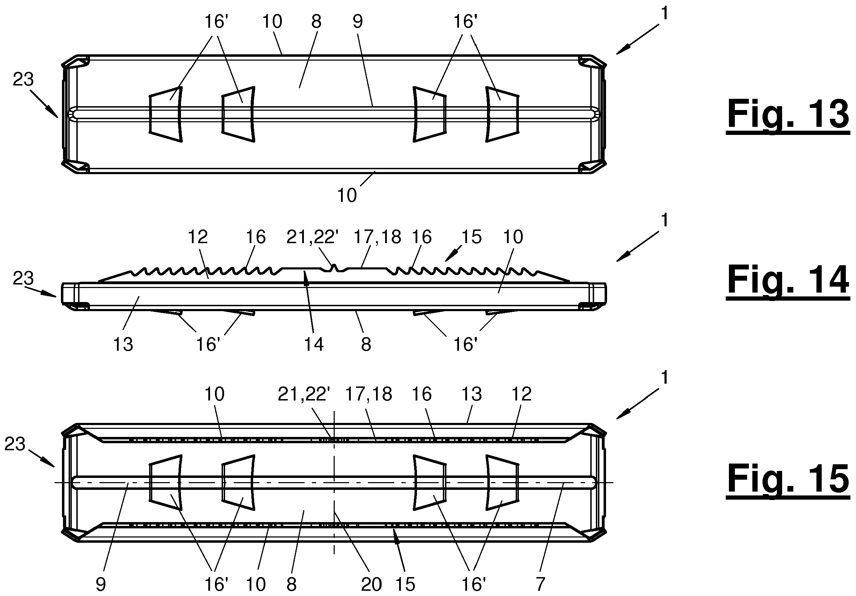

Figur 12 bis 15 zeigen eine nachfolgend erläuterte Variante des Mittenanschlags (21). Alternativ kann der Mittenanschlag (21) noch in anderer Weise ausgebildet sein. Er kann z.B. auch durch Federnasen gebildet sein, die paarweise beidseits der Mitte (20) an einer oder beiden Seitenwänden (10) angeordnet sind.

Der Boden (8) weist vorzugsweise weitgehend ebene Außenbereiche für die plane Anlage am Hohlprofilboden (29) auf. Falls am Hohlprofilboden (29) sich ein oder mehrere Durchlässe bzw. Perforationsreihen befinden, kann der Verbinderboden (8) in diesem Bereich eine axiale und rinnenförmige Ausnehmung (9) aufweisen und die Perforationsreihe überdecken. In den Ausführungsbeispielen von Figur 1 bis 11 hat der Boden (8) eine geschlossene Form.

Der Steckverbinder (1) hat die besagten bevorzugten offenen Stirnseiten (23) und einen über die Länge durchgehenden inneren Hohlraum (24), durch den das granulierte Trocknungsmittel über die Stoßstelle (6) fließen kann. Die Durchlässe bzw. Perforationsreihen stellen eine Verbindung zu dem im Scheibeninnenraum befindlichen Gas her und ermöglichen dessen Trockenhaltung.

Figur 5 bis 6 sowie Figur 16 bis 18 zeigen die eingangs genannte Steckverbindung (2) mit einem Steckverbinder (1) und den ein- bzw. beidseitig aufgesteckten Hohlprofilenden (3,4) sowie die thermische Verbindung (5), insbesondere Schweißnaht.

Die Steckverbindung (2) wird beispielsweise hergestellt, indem der Steckverbinder (1) zuerst mit dem einen Verbinderschenkel in das eine Hohlprofilende (3) eingesteckt und anschließend das andere Hohlprofilende (4) auf den freien anderen Verbinderschenkel aufgeschoben wird. Hierdurch wird zunächst eine mechanisch wirkende Steckverbindung (2) geschaffen.

Anschließend kann die thermische Verbindung (5) gebildet werden. Hierfür werden z.B. durch ein Laserschweißgerät oder ein anderes manuelles oder automatisches Gerät die aneinander stoßenden Stirnwandbereiche der Hohlprofilenden (3,4) bevorzugt von außen erwärmt und plastifiziert, wobei sie sich miteinander und ggf. mit den dort befindlichen Teilen des Steckverbinders (1) verbinden. Der Verbindungsvorgang kann z.B. ein Verschmelzen oder Verkleben sein. Die thermische Verbindung (5) bzw. die Verbindungsnaht kann sich über den gesamten Umfang der Hohlprofilenden (3,4) und ggf. des Steckverbinders (1) an der Verbindungsstelle (6) erstrecken. Sie kann alternativ nur an einem Teilbereich vorhanden sein, z.B. am Dachbereich (27) und den schrägen Bereichen der Seitenwände (28) der Hohlprofilenden (3,4).

Figur 8 bis 11 verdeutlichen Ausbildungsvarianten des Steckverbinders (1), bei denen die Seitenwände (10) eine nach außen gerichtete Ausbuchtung (19) aufweisen. Diese kann in unterschiedlicher Weise ausgebildet sein.

In der ersten Variante der Seitenansicht von Figur 8 und der zugehörigen abgebrochenen Draufsicht von Figur 9 ist die Ausbuchtung (19) als Sicke ausgebildet, die seitlich aus der Seitenwand (10), z.B. aus deren unterem Seitenwandbereich (13), nach außen gewölbt ist. In der gezeigten Ausführungsform sind zwei stabförmige und senkrecht zum Boden (8) ausgerichtete sickenförmige Ausbuchtungen (19) beidseits der Mitte (20) vorhanden. Alternativ kann die Sickenzahl kleiner oder größer sein. Eine einzelne sickenförmige Ausbuchtung (19) kann sich z.B. über die Mitte (20) hinweg erstrecken.

In der zweiten Variante mit der Seitenansicht von Figur 10 und der zugehörigen abgebrochenen Draufsicht von Figur 11 ist die Ausbuchtung (19) als freigeschnittene Ausprägung ausgebildet, bei der ein in Axialrichtung freigeschnittener oder anderweitig freigestellter Seitenwandbereich nach außen gewölbt ist. Die Ausprägung (19) erstreckt sich über die Mitte (20) hinweg und hat eine größere axiale Erstreckung.

Die ein oder mehreren Ausbuchtungen (19) befinden sich an denjenigen Seitenwandbereichen, die in Einsteckstellung in Anlage mit einem zugewandten Innenwandbereich des aufgesteckten Hohlprofilendes (3,4) gelangen. In den gezeigten Ausführungsbeispielen sind dies die unteren Seitenwandbereiche (13).

Die erfindungsgemäßen Ausbuchtungen (19) haben eigenständige erfinderische Bedeutung und können auch bei anderen konventionellen Steckverbindern eingesetzt werden, die in anderer Weise ausgebildet sind und ggf. nicht die vorbeschriebene Ausbildung und Eignung für eine thermische Verbindung (5) aufweisen. Dies können z.B. im Querschnitt U-förmige oder kastenförmige Steckverbinder sein, die z.B. gemäß der DE 20 2009 008 694 U1 oder der EP 0 283 689 A2 ausgebildet sind. Derartige Steckverbinder können aus Metall, insbesondere aus Stahlblech oder aus Kunststoff oder aus anderen geeigneten Materialien bestehen. Sie können andere Mittenanschläge und andere, ggf. mehrfach vorhandene Rückhalteelemente, z.B. Federnasen, Lamellen oder dgl. aufweisen, die ferner an anderer Stelle der Seitenwände und/oder am Verbinderboden angeordnet sein können.

Figur 12 bis 15 zeigen eine weitere Variante des Steckverbinders (1), die weitgehend mit den vorbeschriebenen Ausführungsbeispielen übereinstimmt.

Der gezeigte Steckverbinder (1) hat ebenfalls im Querschnitt eine im Wesentlichen U-artige Hammerkopf-Form. Er besitzt einen Boden (8) und an dessen beiden Längsrändern anschließende Seitenwände bzw. Seitenstege (10) mit der besagten Stufe (11) und der Stütz- und Rückhaltestruktur (15) am oberen freien Seitenstegrand (14). Eine seitliche Ausbuchtung oder Ausprägung (19) fehlt bei dieser Variante, kann aber alternativ vorhanden sein. Der gezeigte Steckverbinder (1) hat in dieser Variante ebenfalls offene Stirnseiten (23) und einen durchgängigen Hohlraum (24).

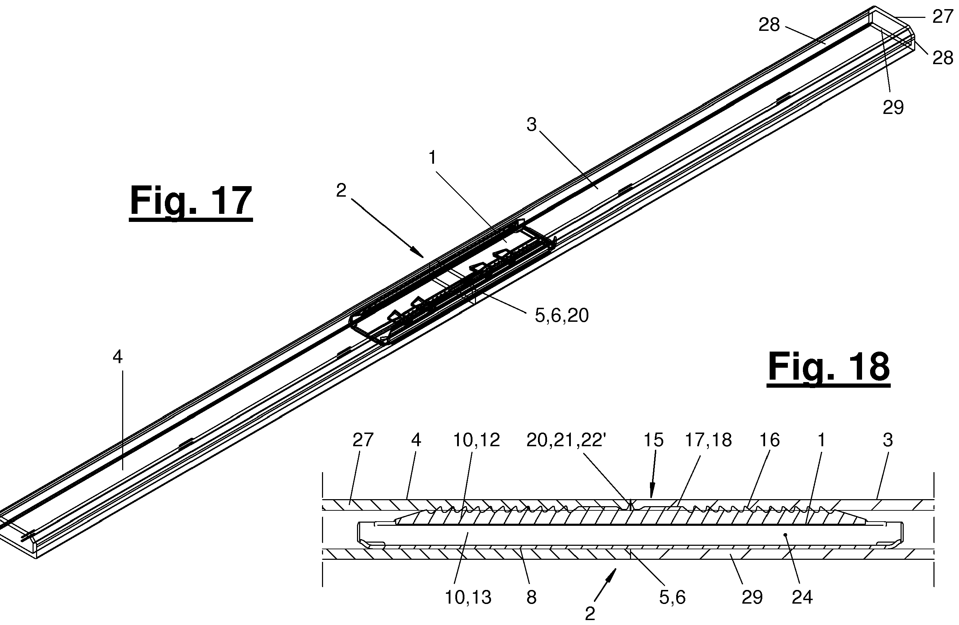

Ein Unterschied der gezeigten Variante gegenüber dem ersten Ausführungsbeispiel besteht in der Rückhaltetechnik und in der Gestaltung des Bodens (8). Am Boden (8) sind ein oder mehrere weitere Rückhalteelemente (16') angeordnet, die gegen den Boden (29) der Hohlprofilenden (3,4) wirken. Die Rückhalteelemente (16') sind z.B. als schräg nach außen gerichtete und vom Boden (8) freigeschnittene sowie abgebogene federnde Bodennasen ausgebildet. Diese sind zentral und z.B. jeweils paarweise beidseits der Verbindermitte (20) angeordnet sowie zur Verbindermitte (20) hin schräg ausgestellt. Sie werden beim Aufstecken eines Hohlprofilendes (3,4) überfahren und federnd zurückgedrängt, wobei sie sich mit ihren freien und z.B. scharfkantigen Rändern am Profilboden (29) verkeilen oder eingraben und zusammen mit den oberen Rückhalteelementen (16) ein Abziehen des beaufschlagten Hohlprofilendes (3,4) verhindern. Figur 16 und 17 verdeutlichen dies bei der gezeigten Steckverbindung (2).

Ein weiterer Unterschied gegenüber dem ersten Ausführungsbeispiel besteht in der Ausbildung des Mittenanschlags (21). Dieser wird in der Variante von Figur 12 bis 15 durch zwei kleine starre Anschlagnasen (22') gebildet, die zentral an der Verbindermitte (20) und an der Oberkante (18) beider Seitenwände (10) angeordnet sind. Die Anschlagnasen (22') ragen nach oben und haben eine schlanke keilförmige Gestalt. Sie bilden einen beidseitig wirkenden Minianschlag, der sich beim Aufstecken der Hohlprofilenden (3, 4) in deren Stirnseiten eingräbt und dadurch einen dichten Zusammenstoß der Profilstirnseiten an der Verbindungsstelle (6) ermöglicht. Dies ist für die Abdichtung des Abstandshalters und auch für eine thermische Verbindung (5) von Vorteil. Figur 17 zeigt diesen dichten Stoß.

Ferner kann der beschriebene Steckverbinder (1) mit der Hammerkopfform auch für konventionelle Hohlprofile (3,4) und Steckverbindungen (2) ohne thermische Verbindung (5) mit Vorteil eingesetzt werden. Der gezeigte Mittenanschlag (21) sowie die Stütz- und Rückhaltestruktur (15) und die massive und unterbrechungsfreie Seitenwandausbildung unterhalb der Stütz- und Rückhaltestruktur (15) haben auch für eine mechanische Verkrallung des Steckverbinders (1) in den Hohlprofilenden (3,4) und den dadurch bewirkten Zusammenhalt Vorteile.

Abwandlungen der gezeigten und bevorzugten Ausführungsformen sind in verschiedener Weise möglich. Insbesondere können die Merkmale der verschiedenen Ausführungsbeispiele in beliebiger Weise miteinander kombiniert und ggf. auch ausgetauscht werden.

### BEZUGSZEICHENLISTE

- 1: Steckverbinder
- 2: Steckverbindung
- 3: Hohlprofil, Hohlprofilende
- 4: Hohlprofil, Hohlprofilende
- 5: thermische Verbindung, Schweißverbindung
- 6: Verbindungsstelle
- 7: Längsachse
- 8: Boden, Mittelsteg
- 9: Ausnehmung, Rinne
- 10: Seitenwand, Seitensteg
- 11: Einsprung, Stufe
- 12: oberer Seitenwandbereich
- 13: unterer Seitenwandbereich
- 14: freier Rand
- 15: Stütz- und Rückhaltestruktur
- 16: Rückhalteelement oben, Zahn, Zahnleiste
- 16': Rückhalteelement unten, Bodennase
- 17: Stützleiste
- 18: Oberkante
- 19: Ausbuchtung, Ausprägung seitlich
- 20: Mitte, Verbindermitte
- 21: Mittenanschlag
- 22: Anschlagnase
- 22': Anschlagnase, Minianschlag
- 23: Stirnseite, Verbinderende
- 24: Hohlraum
- 25: Bodenzunge
- 26: Seitenzunge
- 27: Dach von Hohlprofil
- 28: Seitenwand von Hohlprofil
- 29: Boden von Hohlprofil

## Patentansprüche

1. Steckverbinder für Hohlprofile (3,4) von Abstandshaltern einer Isolierverglasung, wobei der Steckverbinder (1) einen Boden (8) mit randseitigen Seitenwänden (10) sowie einen Mittenanschlag (21) und Rückhalteelemente (16) aufweist, wobei der Steckverbinder (1) zumindest im Bereich der Verbindermitte (20) ein temperaturfestes Material, insbesondere Metall, vorzugsweise Stahl, aufweist und für eine thermische Verbindung (5), insbesondere Schweißverbindung, der Hohlprofile (3,4) geeignet ausgebildet ist und zumindest im mittleren Bereich eine gegenüber äußeren Querbelastungen steife Form aufweist, wobei der Steckverbinder (1) einen im Wesentlichen U-förmigen Querschnitt mit einer Hammerkopfform und mit im oberen Bereich (12) stufenförmig einspringenden (11) Seitenwänden (10) aufweist und wobei die Seitenwände (10) am oberen freien Rand (14) eine gegen das Dach (27) der Hohlprofile (3,4) gerichtete Stütz- und Rückhaltestruktur (15) aufweisen und wobei die Stütz- und Rückhaltestruktur (15) beidseits des Mittenanschlags (21) eine Stützleiste (17) mit einer geraden axialen Oberkante (18) aufweist.

2. Steckverbinder nach Anspruch 1, **dadurch gekennzeichnet, dass** der Boden (8) und die Seitenwände (10) als dünnwandige Stege ausgebildet sind.

3. Steckverbinder nach Anspruch 1 oder 2, **dadurch gekennzeichnet, dass** der obere und der untere Seitenwandbereich (12,13) eine im wesentlichen ebene Form aufweisen, wobei der obere und der untere Seitenwandbereich (12,13) im wesentlichen parallel ausgerichtet sind.

4. Steckverbinder nach einem der vorhergehenden Ansprüche, **dadurch gekennzeichnet, dass** die Seitenwände (10) unterhalb der Stütz- und Rückhaltestruktur (15) über ihre Länge und über die Verbindermitte (20) hinweg massiv und unterbrechungsfrei ausgebildet sind.

5. Steckverbinder nach einem der vorhergehenden Ansprüche, **dadurch gekennzeichnet, dass** der Mittenanschlag (21) am oberen freien Rand (14) der Seitenwände (10) angeordnet ist.

6. Steckverbinder nach einem der vorhergehenden Ansprüche, **dadurch gekennzeichnet, dass** die Stütz- und Rückhaltestruktur (15) beidseits des Mittenanschlags (21) und der Stützleisten (17) mehrere Rückhaltelemente (16), insbesondere Zähne, aufweist.

7. Steckverbinder nach einem der vorhergehenden Ansprüche, **dadurch gekennzeichnet, dass** der Mittenanschlag (21) feste und gegeneinander versetzte keilförmige Anschlagnasen (22) oder starre und als beidseitiger Minianschlag wirkende zentrale Anschlagnasen (22') an den freien Rändern (14) aufweist.

8. Steckverbinder nach einem der vorhergehenden Ansprüche, **dadurch gekennzeichnet, dass** der Steckverbinder (1) als Geradverbinder ausgebildet ist und offene Stirnseiten (23) und einen über die Länge durchgehenden inneren Hohlraum (24) aufweist.

9. Steckverbinder oder nach einem der vorhergehenden Ansprüche, **dadurch gekennzeichnet, dass** der Steckverbinder (1) an den Seitenwänden (10) im Bereich der Verbindermitte (20) eine nach außen gerichtete Ausbuchtung (19), insbesondere Ausprägung, aufweist.

10. Steckverbinder nach einem der vorhergehenden Ansprüche, **dadurch gekennzeichnet, dass** der Boden (8) außenseitig eine oder mehrere axiale, rinnenförmige Ausnehmungen (9) aufweist.

11. Steckverbinder nach einem der vorhergehenden Ansprüche, **dadurch gekennzeichnet, dass** der Boden (8) geschlossen ausgebildet ist oder beidseits der Mitte (20) weitere Rückhaltelemente (16'), insbesondere freigeschnittene und schräg nach außen abgebogene federnde Bodennasen, aufweist.

12. Steckverbinder nach einem der vorhergehenden Ansprüche, **dadurch gekennzeichnet, dass** der Steckverbinder (1) als Stanz- und Biegeteil aus Metall, insbesondere aus Stahlblech, ausgebildet ist.

13. Steckverbindung, bestehend aus Hohlprofilenden (3,4) von Abstandshaltern einer Isolierverglasung und einem dort eingesteckten Steckverbinder (1), **dadurch gekennzeichnet, dass** der Steckverbinder (1) nach mindestens einem der Ansprüche 1 bis 12 ausgebildet ist.

14. Steckverbindung nach Anspruch 13, **dadurch gekennzeichnet, dass** die Hohlprofilenden (3,4) an der Verbindungsstelle (6) eine thermische Verbindung (5), insbesondere eine Schweißverbindung, aufweisen.

15. Steckverbindung nach Anspruch 13 oder 14, **dadurch gekennzeichnet, dass** die Hohlprofilenden (3,4) zumindest bereichsweise Metall aufweisen.

## Claims

1. Plug connector for hollow profiles (3, 4) of spacers of an insulating glazing, wherein the plug connector (1) has a base (8) with edge-side lateral walls (10) and also has a centre stop (21) and retaining elements (16), wherein the plug connector (1) consists of a temperature-resistant material, in particular metal, preferably steel, at least in the region of the connector centre (20) and is designed to be suitable for a thermal connection (5), in particular a welded connection, of the hollow profiles (3, 4) and has a shape which is rigid in relation to external transverse loads at least in the central region, wherein the plug connector (1) has a substantially U-shaped cross section with a hammerhead shape and with lateral walls (10), which are recessed in steps (11) in the upper region (12), and wherein the lateral walls (10) have a supporting and retaining structure (15), which is directed towards the roof (27) of the hollow profiles (3, 4), at the upper free edge (14), and wherein the supporting and retaining structure (15) has, on either side of the centre stop (21), a supporting strip (17) with a straight axial upper edge (18) .

2. Plug connector according to Claim 1, **characterized in that** the base (8) and the lateral walls (10) are designed as thin-walled webs.

3. Plug connector according to Claim 1 or 2, **characterized in that** the upper and the lower lateral wall regions (12, 13) have a substantially planar shape, wherein the upper and the lower lateral wall regions (12, 13) are oriented substantially parallel.

4. Plug connector according to one of the preceding claims, **characterized in that** the lateral walls (10) are of solid and interruption-free design over their length and over the connector centre (20) below the supporting and retaining structure (15).

5. Plug connector according to one of the preceding claims, **characterized in that** the centre stop (21) is arranged at the upper free edge (14) of the lateral walls (10) .

6. Plug connector according to one of the preceding claims, **characterized in that** the supporting and retaining structure (15) has a plurality of retaining elements (16), in particular teeth, on either side of the centre stop (21) and the supporting strips (17).

7. Plug connector according to one of the preceding claims, **characterized in that** the centre stop (21) has fixed wedge-shaped stop lugs (22) which are offset in relation to one another or rigid central stop lugs (22') which act as mini stops on either side at the free edges (14) .

8. Plug connector according to one of the preceding claims, **characterized in that** the plug connector (1) is designed as a straight connector and has open end sides (23) and an inner cavity (24) which is continuous over the length.

9. Plug connector according to one of the preceding claims, **characterized in that** the plug connector (1) has an outwardly directed projection (19), in particular protrusion, on the lateral walls (10) in the region of the connector centre (20).

10. Plug connector according to one of the preceding claims, **characterized in that** the base (8) has one or more axial, channel-like recesses (9) on the outside.

11. Plug connector according to one of the preceding claims, **characterized in that** the base (8) is of closed design or has further retaining elements (16'), in particular spring-action base lugs which are cut free and bent away obliquely to the outside, on either side of the centre (20).

12. Plug connector according to one of the preceding claims, **characterized in that** the plug connector (1) is designed as a stamped-and-bent part composed of metal, in particular of sheet steel.

13. Plug connection consisting of hollow profile ends (3, 4) of spacers of an insulation glazing and a plug connector (1) which is inserted there, **characterized in that** the plug connector (1) is designed according to at least one of Claims 1 to 12.

14. Plug connection according to Claim 13, **characterized in that** the hollow profile ends (3, 4) have a thermal connection (5), in particular a welded connection, at the connecting point (6).

15. Plug connection according to Claim 13 or 14, **characterized in that** the hollow profile ends (3, 4) contain metal at least in regions.

## Revendications

1. Connecteur à enfichage pour profilés creux (3, 4) d'entretoises d'un vitrage isolant, le connecteur à enfichage (1) possédant un fond (8) ayant des parois latérales (10) côté bord ainsi qu'une butée centrale (21) et des éléments de retenue (16), le connecteur à enfichage (1) possédant un matériau résistant à la température, notamment du métal, de préférence de l'acier, au moins dans la zone du centre du connecteur (20) et étant configuré de manière appropriée pour un assemblage thermique (5), notamment un assemblage soudé, des profilés creux (3, 4) et présentant au moins dans la zone centrale une force rigide aux charges transversales externes, le connecteur à enfichage (1) présentant une section transversale sensiblement en forme de U ayant une forme de tête de marteau et ayant des parois latérales (10) s'encliquetant (11) en forme de gradin dans la zone supérieure (12) et les parois latérales (10) possédant au niveau du bord libre supérieur (14) une structure de soutien et de retenue (15) orientée contre le toit (27) des profilés creux (3, 4) et la structure de soutien et de retenue (15) possédant des deux côtés de la butée centrale (21) une baguette de soutien (17) ayant un bord supérieur axial (18) rectiligne.

2. Connecteur à enfichage selon la revendication 1, **caractérisé en ce que** le fond (8) et les parois latérales (10) sont réalisés sous la forme de nervures à paroi mince.

3. Connecteur à enfichage selon la revendication 1 ou 2, **caractérisé en ce que** les zones de paroi latérale supérieure et inférieure (12, 13) ont une forme sensiblement plate, les zones de paroi latérale supérieure et inférieure (12, 13) étant orientées sensiblement en parallèle.

4. Connecteur à enfichage selon l'une des revendications précédentes, **caractérisé en ce que** les parois latérales (10), au-dessous de la structure de soutien et de retenue (15), sont formées massives et de manière ininterrompue sur leur longueur et au-delà du centre du connecteur (20).

5. Connecteur à enfichage selon l'une des revendications précédentes, **caractérisé en ce que** la butée centrale (21) est disposée au niveau du bord libre supérieur (14) des parois latérales (10).

6. Connecteur à enfichage selon l'une des revendications précédentes, **caractérisé en ce que** la structure de soutien et de retenue (15) possède plusieurs éléments de retenue (16), notamment des dents, des deux côtés de la butée centrale (21) et des baguettes de soutien (17).

7. Connecteur à enfichage selon l'une des revendications précédentes, **caractérisé en ce que** la butée centrale (21) possède, au niveau des bords libres (14), des tenons de butée cunéiformes (22) fixes et décalés les uns par rapport aux autres ou des tenons de butée centraux (22') rigides et agissant comme une butée miniature bilatérale.

8. Connecteur à enfichage selon l'une des revendications précédentes, **caractérisé en ce que** le connecteur à enfichage (1) est réalisé sous la forme d'un connecteur droit et possède des côtés frontaux (23) ouverts ainsi qu'un espace creux (24) interne continu sur la longueur.

9. Connecteur à enfichage selon l'une des revendications précédentes, **caractérisé en ce que** le connecteur à enfichage (1) possède une courbure (19) orientée vers l'extérieur, notamment un gaufrage, au niveau des parois latérales (10) dans la zone du centre du connecteur (20).

10. Connecteur à enfichage selon l'une des revendications précédentes, **caractérisé en ce que** le fond (8) possède, du côté extérieur, une ou plusieurs cavités (9) axiales en forme de rigole.

11. Connecteur à enfichage selon l'une des revendications précédentes, **caractérisé en ce que** le fond (8) est configuré fermé ou possède, des deux côtés du centre (20), des éléments de retenue supplémentaires (16'), notamment des tenons de fond libérés par découpe ou coudés de manière flexible en biais vers l'extérieur.

12. Connecteur à enfichage selon l'une des revendications précédentes, **caractérisé en ce que** le connecteur à enfichage (1) est réalisé sous la forme d'une pièce estampée et cintrée en métal, notamment en tôle d'acier.

13. Connexion par enfichage, composée d'extrémités de profilés creux (3, 4) d'entretoises d'un vitrage isolant et d'un connecteur à enfichage (1) qui y est inséré, **caractérisée en ce que** le connecteur à enfichage (1) est réalisé selon au moins l'une des revendications 1 à 12.

14. Connexion par enfichage selon la revendication 13, **caractérisée en ce que** les extrémités de profilés creux (3, 4) présentent, au niveau du point d'assemblage (6), un assemblage thermique (5), notamment un assemblage soudé.

15. Connexion par enfichage selon la revendication 13 ou 14, **caractérisée en ce que** les extrémités de profilés creux (3, 4) présentent un métal au moins dans certaines zones.
